# EUROPEAN PATENT APPLICATION

(11) **EP 1 998 548 A2**
(43) Date of publication of application: **03.12.2008**
(21) Application number: 08009670.4
(22) Date of filing: 28.05.2008
(51) Int. Cl.: H04N 1/32

(54) **System capable of attaching positional information to image file and memory card**

(30) Priority: 30.05.2007 TW 96119275
(71) Applicant: ATP Electronics Taiwan Inc., Neihu Taipei City 114 (TW)
(72) Inventor: Hsieh, Tim, Guanyin Township Taoyuan County 328 (TW); Kuo, Yu-Yin, Neihu District, Taipei City 114 (TW); Kuo, Chun-Horn, Beitou District Taipei City 112 (TW); Chang, Che-Yuan, Jhongshan District, Taipei City 104 (TW)
(74) Representative: Becker, Bernd

(57) **Abstract**

The invention discloses a system capable of attaching position information to an image file, and the system comprises a GPS recorder and a memory card. The GPS recorder is used for receiving the position information and transmitting the position information via wireless transmission. When an image file is generated and stored in the memory card, the position information received from the GPS recorder will be immediately attached to the image file.

## Description

### BACKGROUND OF THE INVENTION

### 1. Field of the invention

The invention relates to a system capable of attaching positional information to an image file; in particular, it relates to a system capable of immediately attaching positional information received from a global positioning system (GPS) recorder to an image file via wireless transmission.

### 2. Description of the prior art

With the advance of technology, more and more applications of GPS have been developed. GPS can be used for car navigation; besides, GPS integrated in a camera can record longitude and latitude information of where the photo is taken. Nowadays, a GPS recorder for recording positional and time information of where the user locates has been developed. Additionally, a photo of a digital camera generally is fit for exchangeable image file format (Exif), and the information of the photo such as camera type, date and image size can be obtained. Therefore, both information recorded by the GPS recorder and photos can be inputted into a computer; moreover, positional information of a photo can be attached to the photo. Afterward, users can upload the photo attached with positional information to Google Map or Google Earth website. Accordingly, the relation between places and photos can be presented by Google Map and Google Earth websites.

However, the GPS recorder nowadays can not directly connect with the memory card storing image files, and an electronic apparatus (e.g. a digital camera or a card reader) can not configure with a memory card, either. Namely, when a photo is taken by users, positional information can not be immediately attached to the photo. If users want to attach positional information to the photo (e.g. an image file), an independent device such as a computer is required. In other words, users must utilize computer and take additional time to attach positional information received from the GPS recorder to the photo. It is not convenient for users at all.

Therefore, the scope of the invention is to provide a system capable of attaching positional information to an image file via wireless transmission to solve the aforesaid problems.

### SUMMARY OF THE INVENTION

A scope of the invention is to provide a system capable of attaching positional information to the image file. The system comprises a GPS recorder and a memory card, and both have a function of wireless transmission. The memory card of the invention will automatically receive positional information transmitted from the GPS recorder, and then it will automatically attach positional information to the corresponding image file stored in the memory card.

According to a preferred embodiment, the system of the invention comprises a GPS recorder and a memory card. The GPS recorder comprises a GPS receiver, a first wireless bi-direction module, a memory, and a micro-controlling unit (MCU). The memory card comprises a storage unit, a second wireless bi-direction module, and a card controller.

In this embodiment, the GPS receiver of the GPS recorder is used for receiving a plurality of positional information. The memory is used for storing the positional information. The first wireless bi-direction module is used for transmitting the positional information. The MCU is used for controlling the GPS receiver, the memory, and the first wireless bi-direction module.

In this embodiment, the second wireless bi-direction module is used for receiving one of the positional information transmitted from the first wireless bi-direction module. When the image file is generated, the card controller will store the image file into the storage unit, and the positional information received by the second wireless bi-direction module will be immediately attached to the image file.

Therefore, according to the memory card and the GPS recorder of the invention, when user takes a photo, the positional information can be immediately and automatically attached to the image file via wireless transmission. It is easy for user to operate. Additionally, the memory card of the invention provides a set of controlling commands which can be utilized by a host to get instantaneous GPS coordinates such that the host can display the instantaneous GPS coordinates.

The advantage and spirit of the invention may be understood by the following recitations together with the appended drawings.

### BRIEF DESCRIPTION OF THE APPENDED DRAWINGS

FIG. 1 shows a block diagram of the system capable of attaching the positional information to the image file according to a preferred embodiment of the invention.
FIG. 2 shows a block diagram of the GPS recorder according to another preferred embodiment of the invention.

### DETAILED DESCRIPTION OF THE INVENTION

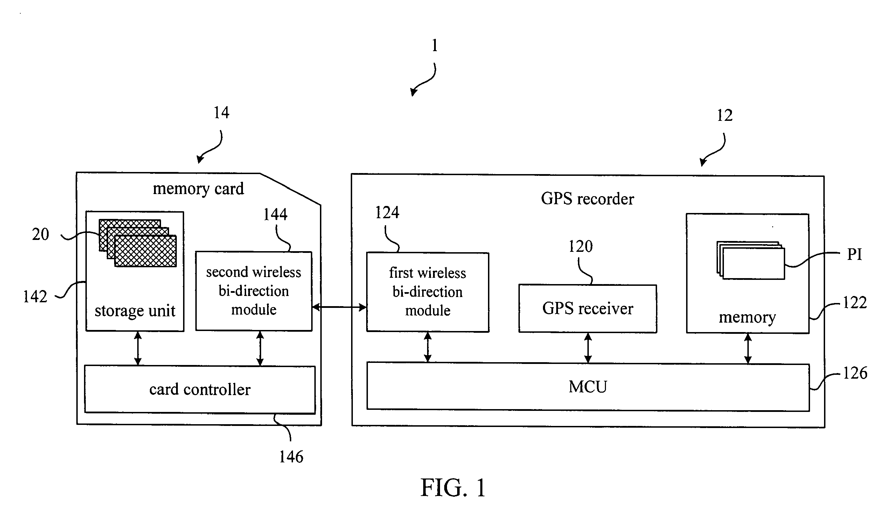

Please refer to FIG. 1. FIG. 1 shows a block diagram of the system 1 capable of attaching the positional information PI to the image file 20 according to a preferred embodiment of the invention. The system 1 of the invention comprises the GPS recorder 12 and the memory card 14. The GPS recorder 12 comprises the GPS receiver 120, the first wireless bi-direction module 124, the memory 122, and the MCU 126. The memory card 14 comprises the storage unit 142, the second wireless bi-direction module 144, and the card controller 146.

In this embodiment, the GPS receiver 120 is used for receiving a plurality of positional information PI, and each of the positional information PI comprises a coordinate and/or place name. The memory 122 is used for storing positional information PI, and it is a non-volatile memory such as flash memory. The first wireless bi-direction module 124 is used for transmitting the positional information PI. The MCU 126 is used for controlling the GPS receiver 120, the memory 122, and the first wireless bi-direction module 124. The positional information PI received by the GPS receiver 120 can be stored in the memory 122 by the MCU 126, and the first wireless bi-direction module 124 can get the positional information PI stored in the memory 122 by the MCU 126.

In this embodiment, the storage unit 142 is a NAND flash memory. The second wireless bi-direction module 144 is used for receiving one of the positional information PI transmitted from the first wireless bi-direction module 124. When the image file 20 is generated, the card controller 146 will store the image file 20 into the storage unit 142, and it will immediately attach the positional information PI received by the second wireless bi-direction module 144 to the image file 20. Additionally, the first wireless bi-direction module 124 or the second wireless bi-direction module 144 is one selected from a group consisting of a ZigBee module, a WiFi module, and a Bluetooth module.

For example, at 12:30, January 1, 2007, a user utilizes a digital camera to generate an image file (i.e. a photo). At that time, the positional information PI transmitted by the first wireless bi-direction module 124 of the GPS recorder 12 is "Taipei". The second wireless bi-direction module 144 of the memory card 14 immediately receives the positional information "Taipei" from the GPS recorder 12. Then, the card controller 146 can immediately attach the positional information "Taipei" to the image file 20.

In other words, if a user has the system 1 capable of attaching the positional information PI to the image file 20, the positional information PI will be immediately and automatically attached to the image file 20. Further, a user does not need to utilize a computer to attach the positional information PI of the GPS recorder to the image file 20.

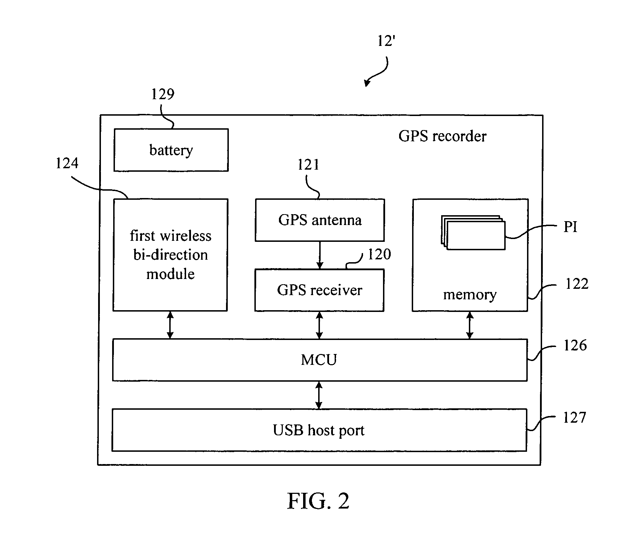

Please refer to FIG. 2. FIG. 2 shows a block diagram of the GPS recorder 12' according to another preferred embodiment of the invention. The main difference between the GPS recorder 12' and the GPS recorder 12 is that the GPS recorder 12' further comprises the GPS antenna 121, the USB host port 127, and the battery 129. The GPS antenna 121 is coupled to the GPS receiver 120. The battery 129 is used for providing the power for the GPS recorder 12'. The USB host port 127 is used for connecting an electronic apparatus (not shown) such as a computer. The function of the GPS recorder 12' shown in FIG. 2 is the same as the GPS recorder 12 shown in FIG. 1, so it will not be described again herein.

Compared to the prior art, and according to the memory card and the GPS recorder of the invention. When a user takes a photo, the positional information can be immediately and automatically attached to the image file via wireless transmission. Consequently, it becomes easy for user to operate. Additionally, the memory card of the invention provides a set of controlling commands which can be utilized by a host to get instantaneous GPS coordinates so that the host can display the instantaneous GPS coordinates easily.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

## Claims

1. A system capable of attaching positional information to an image file, the system comprising:
a global positioning system (GPS) recorder comprising:
a GPS receiver for receiving a plurality of positional information;
a memory for storing the positional information;
a first wireless bi-direction module for transmitting the positional information;
a micro-controlling unit (MCU) for controlling the GPS receiver, the memory, and the first wireless bi-direction module;
a memory card comprising:
a storage unit;
a second wireless bi-direction module, when the image file is generated, for receiving one of the positional information transmitted from the first wireless bi-direction module; and
a card controller, when the image file is generated, for storing the image file into the storage unit and immediately attaching the positional information received by the second wireless bi-direction module to the image file.

2. The system of claim 1, wherein the first wireless bi-direction module or the second wireless bi-direction module is one selected from a group consisting of a ZigBee module, a WiFi module, and a Bluetooth module.

3. The system of claim 1, wherein the GPS recorder further comprises a GPS antenna coupled to the GPS receiver.

4. The system of claim 1, wherein the memory is a non-volatile memory.

5. The system of claim 4, wherein the non-volatile memory is a flash memory.

6. The system of claim 1, wherein each of the positional information comprises a coordinate and/or a place name.

7. The system of claim 1, wherein the GPS recorder further comprises a USB host port.

8. The system of claim 1, wherein the GPS recorder further comprises a battery for providing power for the GPS recorder.

9. The system of claim 1, wherein the storage unit is a NAND flash memory.

10. A memory card capable of wirelessly receiving positional information stored in a GPS recorder, the GPS recorder comprising a first wireless bi-direction module for transmitting the positional information, the memory card comprising:
a storage unit;
a second wireless bi-direction module, when the image file is generated, for receiving the positional information transmitted from the first wireless bi-direction module; and
a card controller, when the image file is generated, for storing the image file into the storage unit and immediately attaching the positional information received by the second wireless bi-direction module to the image file.

11. The memory card of claim 10, wherein the first wireless bi-direction module or the second wireless bi-direction module is one selected from a group consisting of a ZigBee module, a WiFi module, and a Bluetooth module.

12. The memory card of claim 10, wherein the positional information comprises a coordinate and/or a place name.

13. The memory card of claim 10, wherein the storage unit is a NAND flash memory.
